# EUROPEAN PATENT SPECIFICATION

(11) **EP 4 148 458 B1**
(45) Date of publication and mention of the grant of the patent: **10.06.2026**
(21) Application number: 22194796.3
(22) Date of filing: 09.09.2022
(51) Int. Cl.: G01S 7/484, G01S 17/10, G01S 17/89, G01S 17/933, G01S 7/481

(54) **AIRBORNE LASER SCANNER**
LUFTGESTÜTZTER LASERSCANNER
SCANNER À LASER AÉROPORTÉ

(30) Priority: 10.09.2021 US 202117472403
(43) Date of publication of application: 15.03.2023
(73) Proprietor: Leica Geosystems AG, 9435 Heerbrugg (CH); Leica Geosystems AG, 9435 Heerbrugg (CH)
(72) Inventor: STEINMANN, Patrick, CH-9242 Oberuzwil (CH); PAN, Zhigang, Beltsville, MD, 20705 (US)
(74) Representative: Kaminski Harmann

(56) References cited:
- WO-A1-2021/146954
- JP-A- 2017 015 416
- US-B1- 10 556 585
- US-B2- 10 732 282

## Description

### FIELD OF THE INVENTION

The present invention relates to an airborne laser scanner.

### BACKGROUND OF THE INVENTION

Scanning a target, such as the ground surface, with a laser range finder carried by an aircraft for creating 3D point clouds and derivative products is often achieved by moving, in particular rotating or oscillating, an optical element such as a mirror, wedge or prism, so that a wider area around the flight path can be surveyed.

The principle used herein substantially consists of emitting pulsed electromagnetic radiation onto the target and subsequently receiving the radiation that is reflected by the target, wherein the distance to the target is determined on based on the travel times of the pulses, i.e. the time difference between the transmission of a laser pulse (outgoing pulse) and the reception of its echo (return) coming back from a surface. Using the speed of light, the range to the surface is calculated using this measurement.

For example, airborne LiDAR systems (LiDAR: light detection and ranging) use the operating principle of time-of-flight (ToF) measurements to measure the distances between a scanner sensor in the aircraft and the terrain underneath. These ranges, when combined with knowledge of the aircraft trajectory and the respective pulse transmission directions, can be used to generate a 3D point cloud containing the terrain including buildings and vegetation.

The detected return pulses are very precisely sampled over time. The electric signal generated by the detector is converted into a digital signal sequence which is subsequently processed further, typically in real time. The sensor detects both the measurement signal and noise information which can be discarded if identified as such. By using a plurality of sampling points and/or by summing up the received signal synchronously to the emission rate, a useful signal can be identified even under unfavorable circumstances, e.g. enabling measurements over large distances or under noisy or disturbed background conditions.

A downside of the described devices is that for the period of pulse transmission, the sensor is "blind" and cannot detect any received signals. As well, a short period following the transmission, the sensor is still blind (or at least it is set to ignore any incoming signals) due to internal reflections caused by reflective surfaces of the involved optics. It is usual that during a survey, a 3D point cloud is generated that contains many blind points (also called dropouts).

These dropouts now become a problem when they arise in a regular pattern, which occurs with scanners according to the state of the art when the aircraft carrying the scanner flies over a relatively flat surface (such as a parking lot, street, or sports field) at a constant flight level. This regular appearance of blind points cause, for example, quite prominent stripes or circles in the surveyed cloud which immediately catch the viewer's eyes. A fair analysis of the problem shows that it is caused by the way the pulses are modulated.

### OBJECT OF THE INVENTION

The present invention therefore aims at avoiding the above presented problems and provides an improved airborne laser scanner. An airborne laser scanner according to the invention allows for a more accurate and complete airborne survey.

### SUMMARY OF THE INVENTION

The invention relates to an airborne laser scanner configured to be arranged on an aircraft for surveying a target along a flight path, wherein the airborne laser scanner is as defined in claim 1.

Preferred embodiments are defined in the appended dependent claims.

In some embodiments, the second pulse space variation has a digital pattern.

In some embodiments, the second pulse space variation has an analogue pattern.

In some embodiments, the second pulse space variation follows a sinusoidal pattern, a linear zig-zag pattern, a wave pattern, a saw tooth pattern, a step pattern, or any combination of said patterns.

In some embodiments, according to the second pulse space variation, pulse spaces between those pulses emitted during the first period are differing by a constant value from the pulse spaces between those pulses emitted during any of the subsequent periods.

In some embodiments, according to the second pulse space variation, pulse spaces between those pulses emitted during the first period are differing by a proportional value from the pulse spaces between those pulses emitted during any of the subsequent periods.

In some embodiments, according to the second pulse space variation, pulse spaces between those pulses emitted during the first period are differing by a random value from the pulse spaces between those pulses emitted during any of the subsequent periods.

In some embodiments, according to the second pulse space variation, pulse spaces emitted during the subsequent periods are switching between at least two different frequency profiles.

In some embodiments, the periodically repeating movement is a zig-zag movement, a circular movement, or a stroke movement.

In some embodiments, the optical element is a plane mirror, a wedge lens, a prism, or a polygon mirror.

In some embodiments, the optical element is configured for deflecting the laser pulses backscattered from the target towards the receiver.

In some embodiments, the motor is configured for rotating the optical element around a first rotation axis, resulting in a cone-shaped laser pulse emission pattern, wherein the airborne laser scanner further comprises an angle encoder configured for providing positions of the optical element.

In some embodiments, the motor is configured for oscillating the optical element around an oscillation axis, resulting in a fan-shaped laser pulse emission pattern

In some embodiments, the airborne laser scanner comprises an oscillation sensor configured for providing positions of the optical element.

In some embodiments, the computer is configured for determining the directions of the pulse paths based on the provided positions of the optical element.

In some embodiments, the computer is configured for determining a current of the motor and the directions of the pulse paths based on the current.

In some embodiments, the motor is configured for rotating the optical element around a second rotation axis, and the optical element is embodied as a polygon mirror, the deflection by the rotating polygon mirror resulting in a fan-shaped laser pulse emission pattern.

In some embodiments, the optical element is arranged relative to the emitter in such a way that the optical element deflects the laser pulses in a defined constant angle relative to the rotation axis or relative to the oscillation axis.

The invention further relates to a computer-implemented method for reducing ranging bias and measurement point drop-outs caused by internal and near range reflections in an airborne laser scanner arranged on an aircraft, the method being defined in claim 13.

In a preferred embodiment of the computer-implemented method, according to the second pulse space variation, pulse spaces between those pulses emitted during the first period are differing from the pulse spaces between those pulses emitted during any of the subsequent periods by one of: a constant value, a proportional value, and a random value.

### BRIEF DESCRIPTION OF THE DRAWINGS

By way of example only, preferred embodiments of the invention will be described more fully hereinafter with reference to the accompanying figures, wherein:
Figure 1 schematically shows an aircraft carrying an airborne laser scanner according to an embodiment of the invention;
Figures 2-4 schematically show airborne laser scanners according to embodiments of the invention;
Figures 5-9 schematically show scan patterns used in airborne laser scanners according to embodiments of the invention;
Figures 10 and 11 schematically show errors (dropouts) in the scan result of prior art airborne laser scanners;
Figure 12 schematically shows an exemplary first pulse spacing variation used in airborne laser scanners according to embodiments of the invention;
Figure 13 schematically shows an exemplary second pulse spacing variation used in airborne laser scanners according to embodiments of the invention;
Figure 14 schematically shows an exemplary resulting overall pulse spacing variation used in airborne laser scanners according to embodiments of the invention; and
Figures 15-17 schematically show the blind moments of a receiver of an airborne laser scanner due to the emission of transmission pulses.

### DETAILED DESCRIPTION OF THE DRAWINGS

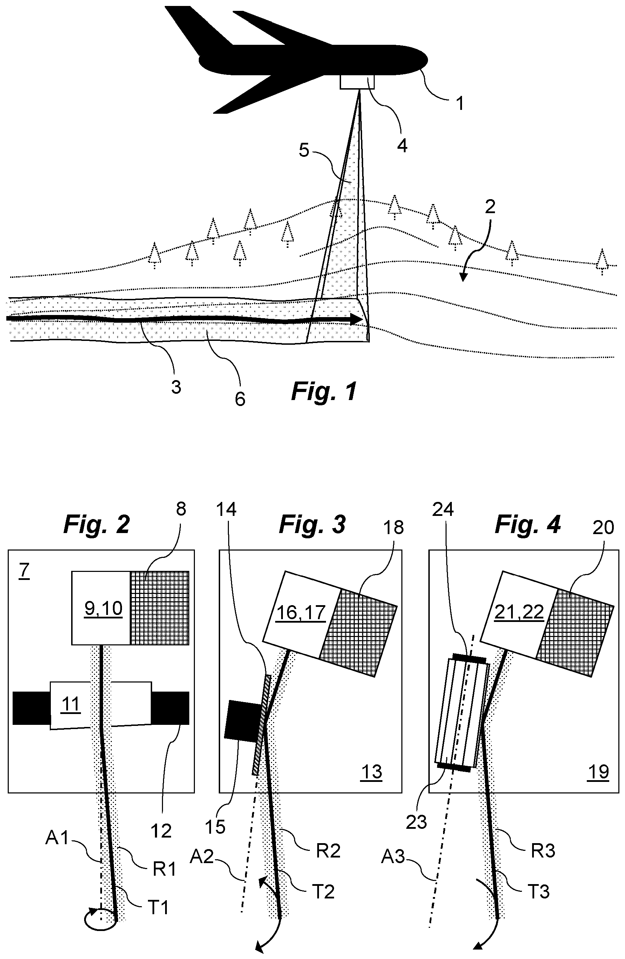

Figure 1 shows an aircraft 1 flying over a ground surface as target 2 while following a flight path 3 (trajectory). The aircraft carries an airborne laser scanner 4 which emits laser pulses 5 which may be used to generate a point cloud 6 of the swath (scanning area) of the aircraft 1. The laser pulse emission pattern is symbolically shown as a pyramid, however, in reality it rather appears as a cone or fan.

Figures 2-4 show three exemplary operating principles that could be applied in an airborne laser scanner according to the invention. Figure 2 shows the airborne laser scanner 7 comprising a computer 8, an emitter 9 and a receiver 10, which in this example are combined in one unit, but may however also be arranged separately. A prism 11, in particular a wedge prism, as optical element is in operative connection with a motor 12, such that it is rotatable around the rotation axis A1. The movement of the optical element 11 induced by the motor 12 may be a continuous or a partial rotatory movement. A continuous rotatory movement is to be understood as at least one full 360° rotation, in particular a permanent sequence of full rotations, and a partial rotatory movement is to be understood as a rotation, in particular a rotation of less than 360°, which is reversed in a defined scheme. For example, after a 180° rotation, the motor changes the rotational direction and goes back the 180°, and so on.

During the movement of the optical element 11, the emitter 9 emits a plurality of consecutive laser pulses T1 towards the target 2. The direction of the pulse path is altered by the movement of the optical element 11. The pulses R1 backscattered from the target 2 are received by the receiver 10. The computer 8 is connected to the emitter 9, the receiver 10, and the motor 12, and it is configured for controlling these components.

In general, the computer of some embodiments may additionally be configured for determining a distance from the airborne laser scanner to the ground surface based on the emitted and received laser pulses, i.e. by calculating the time of flight (TOF). Since the direction in which the optical element is deflecting the pulses, i.e. the direction of the pulse path, is known and/or determinable (e.g. by an angle encoder detecting the rotatory position of the motor), the determined TOF distance value can be assigned to the direction (e.g. at least one coordinate such as angle(s)) of the current pulse path at a specific measurement time.

Particularly, a three-dimensional point cloud based on these data (3D point measurements) can be generated by an external computer in a post-processing. In this case, the internal computer 8 is merely configured to collect the data. The data may comprise time stamps of pulse transmission and pulse reception or distance values already calculated by means of said stamps, and transmission/reception direction. Alternatively, the computer 8 can be configured for generating said point cloud, in particular in real-time.

A second exemplary embodiment 13 is shown in figure 3, wherein the construction is similar to the one shown in figure 2 but the optical element is a mirror 14 instead of a prism. Also, the motor 15 does not perform full rotations as positioning, but performs oscillations around an oscillation axis A2. In particular, the oscillation axis runs along (or: parallel to) the surface of the mirror 14. The oscillation axis A2 can however also run elsewhere. In particular, the oscillation can also be understood as a partial rotatory movement.

By the oscillating positioning of the mirror 14, the transmitted laser pulses T2 are deflected towards the target and back (R2) along a pulse path. Said pulse path pivots laterally to the flight path. As in the former example, the scanner 13 has an emitter/receiver unit (16,17) and a computer 18.

Figure 4 shows a third example. The scanner 19 has a computer 20, an emitter 21, and a receiver 22. The optical element in this case is a polygon mirror 23 which is rotated by a motor 24 around the axis A3. As a result, the pulse paths are stroking always from one side to another. While the polygon mirror 23 would continuously rotate, every time an edge of the mirror reaches the transmission beam T3, the deflection rapidly jumps back to starting point and the pulse paths begins the drift anew. The echoes R3 come back to the receiver 22 following the same scheme.

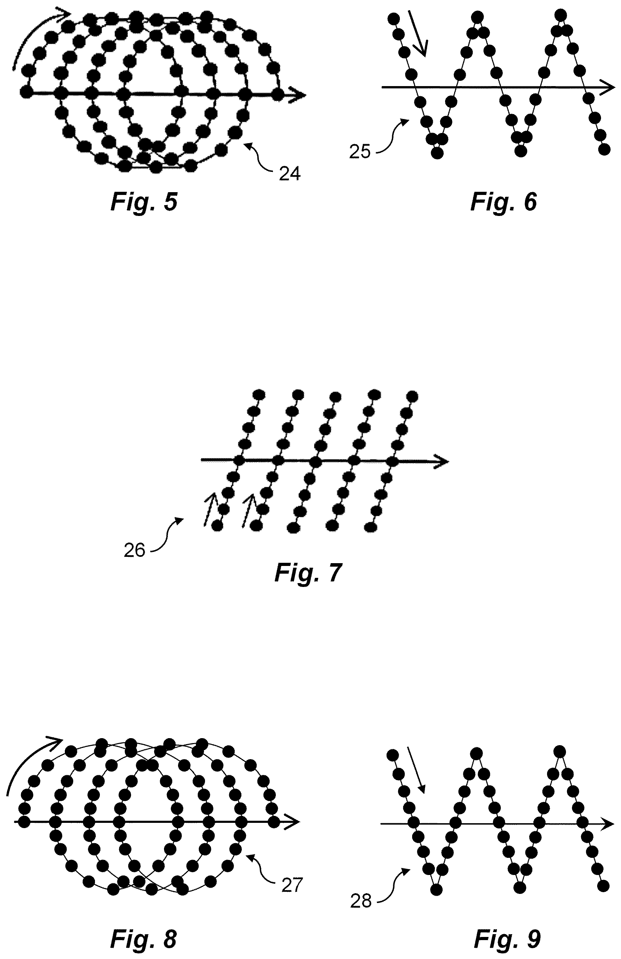

Figures 5-7 show the resulting sampling patterns, i.e. each black point symbolizes a measured 3D point, or respectively, a spot on the target 2 reflecting a measuring pulse. The scan 24 in figure 5 is an outcome of the configuration of the scanner 7 in figure 2. This spiral-shaped pattern comes from the conical pulse path movement caused by the rotating wedge prism 11 and the flight movement. The pattern 25 shown in figure 6 follows the construction of the scanner 13 in figure 3. This zig-zag shape results from the forth-and-back movement of the mirror 14 and the flight movement. The strokes 26 shown in figure 7 are caused by a configuration 19 such as presented with figure 4.

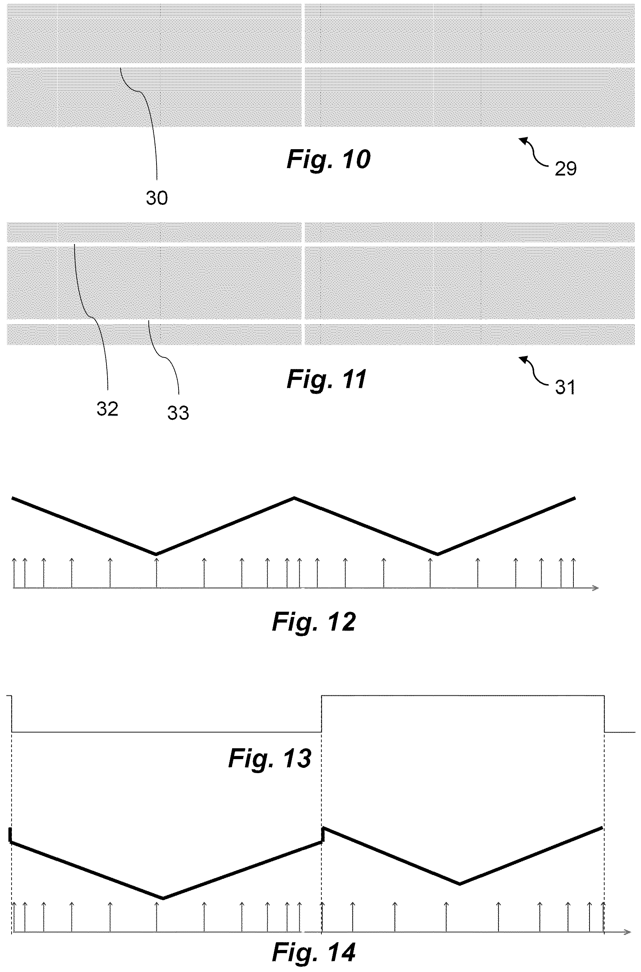

Figures 8 and 9 show respective scan patterns 27 and 28 with an improved point distribution as disclosed in EP 3517998 A1. Scanners with a lateral return movement of the deflecting optical element, as is the case with the scanners 7 and 13, accumulate too many points at the edge of the swath and too few points in the center (roughly: nadir) due to the nature of the pulse path movement. This is not the case for the scanner 19 as the point distribution here is already even. EP 3517998 A1 improved the scanners in that the pulse rate shall depend on by how much the direction of the pulse path momentarily shows in to the side (relative to the direction of the flight path). That is, the more the pulse path would come to the edge of the scanning area, the pulse rate would drop to pick up less points, and in particular, the more the pulse path would come to the center (flight path), the pulse rate may go up or at least to its nominal value. This will also be shown with figure 12 below.

The present invention is aiming at solving a problem that is involved with all of the above presented examples.

Figures 10 and 11 symbolically show 3D point clouds of a respective scanning area with systematic deficiencies in the point cloud. These deficiencies are likely to occur when the aircraft carrying the airborne laser scanner is flying over a ground surface that has little to no profile, e.g. parking lots, sports fields, streets, flat rooftops, lakes, agricultural fields, and so on. Since the scanner is transmitting the laser pulses so rapidly that, before a reflected pulse arrives back at the scanner, at least the next pulse (in particular a plurality of next pulses) is already emitted. This technique is also termed multiple pulses in the air (MPIA). Now when a return pulse reaches the receiver at the same time a transmission pulse is emitted, the receiver is not capable of sampling the return pulse. For the time of emission of a new pulse, the receiver is "blind" (as well as a short period after the emission due to internal reflexes). Therefore, some points cannot be captured.

For example, the scan 29 in figure 10 has a line 30 in the center, i.e. essentially on the flight path, which line 30 is symbolizing a lack of measurement points. This scan has been recorded e.g. with a setup according to figure 3 or figure 4, i.e. the scanning pattern looks like is shown in figure 6/9, or respectively, figure 7. These dropouts happen always in the same lateral position and propagate along the flight direction. The reason for this is that the aircraft is flying at a constant height and the ground is flat as explained above. Now with the mentioned scanning pattern (zig-zag: figure 6 and 9; strokes: figure 7), the outer points are further away from the aircraft, and the points in the center have the shortest distance. Starting from the center line (flight path) both ways sideward, the distance increases symmetrically. So in figure 10 it happens to be the center line where the points are in a certain distance to the aircraft where the scanner cannot catch the points as described above. Figure 11 shows an example of a point cloud 31 with two gap lines 32 and 33, as they are both in such a distance to the aircraft, where the above dropout phenomenon happens.

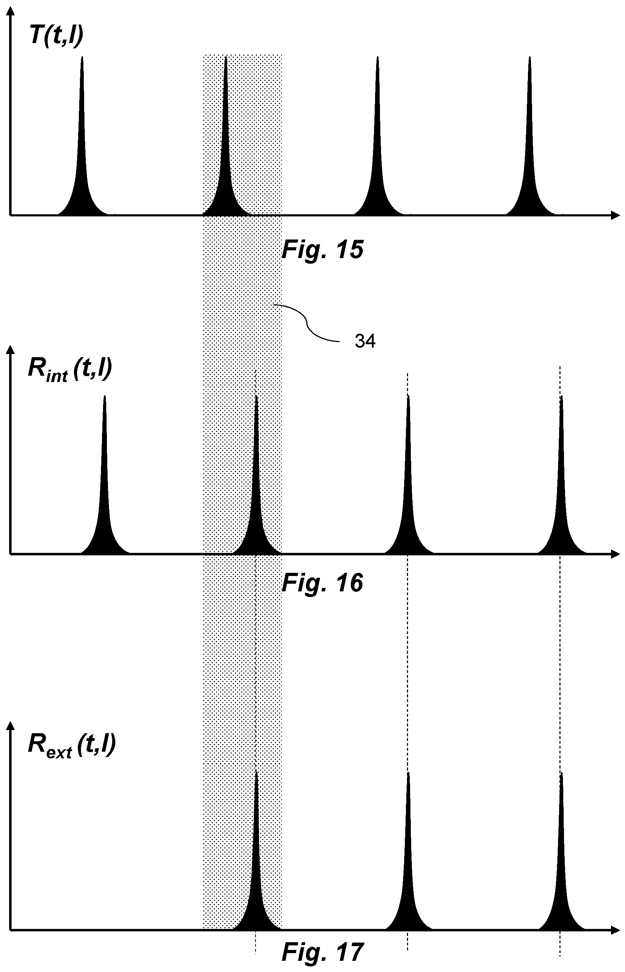

In case of a scanner setup as shown in figure 2 generating a 3D point cloud with a scanning pattern as shown in figure 5, the points on the circle have (substantially) the same distance to the laser scanner. This fact makes the scanner especially vulnerable to the dropouts because if the aircraft is flying in said critical height, not just some but all points are affected. A swift look ahead onto figures 15-17 shows how this happens: The first graph in figure 15 shows the transmission pulses T with their intensity I on the y-axis plotted over the time t on the x-axis. The pulses 34 are sent out with a constant pulse rate. The second graph in figure 16 shows reflection pulses Rᵢₙₜ with their intensity I on the y-axis plotted over the time t on the x-axis. These reflections are caused by optical elements in the interior of the scanner and they end up at the receiver very close to the time period of the transmission. These reflections elongate the time window of blindness 34 of the receiver as it is close to impossible to distinguish these reflection from any real reception pulses from the target. Figure 17 shows a third graph with reception pulses Rₑₓₜ coming back from the target with their intensity I on the y-axis plotted over the time t on the x-axis. They fall into the blindness window 34 and can therefore not be sampled by the receiver.

A pulse space variation with the triangle signal as depicted in figure 12, as explained above, can avoid the total black-out in case of the cone-shaped scanner. According to this variation, the pulse rate goes up when the pulse paths approach nadir and goes down when the pulse paths approach the lateral edge region of the scanning area. However, due to the symmetrical distribution of the pulse rate over a cross-section of the scanning area, this will end up with the same problems as shown in figures 10 and 11 for the scanner configuration as per figure 2, and it will not solve (only reduce, at most) the problem for the scanners as per figures 3 and 4. It is noted that this pulse space variation is just an example and is not necessary to apply the invention. Specifically, when the present disclosure mentions a "first pulse space variation", this does not necessarily refer to said triangle signal.

Embodiments of the present invention massively improve the above presented problem so that dropout points are reduced and/or distributed in a way that they do not catch the eye of the viewer as they are not schematic as shown with figures 10 and 11.

The presented problem is solved by triggering the emitter to emit the laser pulses with a second pulse space variation overlaying with (or in other words: superimposing) a first pulse space variation, wherein according to the second pulse space variation, pulse spaces between those pulses emitted during a first period of a periodically repeating movement are at least in part modified relative to pulse spaces between those pulses emitted during any of subsequent periods of the periodically repeating movement. Figure 13 shows a potential second pulse space variation superimposed onto the triangle signal from figure 12. Figure 14 then shows the resulting pulse space variation or pulse rate variation.

A periodically repeating movement of the pulse path is, applied to the examples presented above, a 360° circle of the conical scan (figure 5), two lines (forth-and-back) of the zig-zag pattern (figure 6), and respectively, one line of the stroke pattern (figure 7). In the embodiment of figure 14, the first period of such a periodically repeating movement is characterized by a pulse space variation that differs from the next period of the periodically repeating movement. The borders between the periods are indicated here with the dashed lines. If the aircraft flies in a critical height over a near-flat surface, then this modification achieves a "dithering" of the dropouts that make the dropouts unrecognizable in the 3D point cloud. Of course, further embodiments may have a different second pulse space variation than that of figure 13 (flip-flop between two factors) to even further advance the survey quality.

In addition, the invention provides a reduction of the ranging bias. The glass returns (internal reflections) can bias the ground returns if they are very close in temporal space. The inventive solution can also reduce the possibility of glass return overlapping with ground returns and therefore there is less so called close terrain noise (ranging bias) because the ground layer is less likely overlapping with the glass or near range returns.

## Claims

1. An airborne laser scanner (4) configured to be arranged on an aircraft for surveying a target (2) along a flight path, wherein the airborne laser scanner comprises
an emitter (9,16,21) configured for emitting a plurality of consecutive laser pulses towards the ground surface,
at least one optical element (11,14,23) configured for deflecting the laser pulses along pulse paths towards the target,
a motor (12,15,24) configured for moving the optical element to cause a periodically repeating movement of the pulse paths,
a receiver (10,17,22) configured for receiving the laser pulses backscattered from the target, and
a computer (8,18,20) configured for
controlling the emitter, the motor, and the receiver,
determining directions of the pulse paths, and
triggering the emitter to emit the laser pulses with a first pulse space variation,
**characterized in that**
the computer is further configured for triggering the emitter to emit the laser pulses with a second pulse space variation overlaying with the first pulse space variation, wherein according to the second pulse space variation, pulse spaces between those pulses emitted during a first period of the periodically repeating movement are at least in part modified relative to pulse spaces between those pulses emitted during any of subsequent periods of the periodically repeating movement.

2. The airborne laser scanner according to claim 1, wherein the second pulse space variation follows a sinusoidal pattern, a linear zig-zag pattern, a wave pattern, a saw tooth pattern, a step pattern, or any combination of said patterns.

3. The airborne laser scanner according to claim 1, wherein according to the second pulse space variation, pulse spaces between those pulses emitted during the first period are differing by
a constant value from the pulse spaces between those pulses emitted during any of the subsequent periods or
a proportional value from the pulse spaces between those pulses emitted during any of the subsequent periods or
a random value from the pulse spaces between those pulses emitted during any of the subsequent periods.

4. The airborne laser scanner according to claim 1, wherein according to the second pulse space variation, pulse spaces emitted during the subsequent periods are switching between at least two different frequency profiles.

5. The airborne laser scanner according to claim 1, wherein the periodically repeating movement is a zig-zag movement, a circular movement, or a stroke movement.

6. The airborne laser scanner according to claim 1, wherein the optical element is a plane mirror (14), a wedge lens, a prism (11), or a polygon mirror (23), in particular wherein the optical element is configured for deflecting the laser pulses backscattered from the target towards the receiver.

7. The airborne laser scanner according to claim 1, wherein the motor (12) is configured for rotating the optical element around a first rotation axis (A1), resulting in a cone-shaped laser pulse emission pattern, wherein the airborne laser scanner further comprises an angle encoder configured for providing positions of the optical element.

8. The airborne laser scanner according to claim 1, wherein the motor (15) is configured for oscillating the optical element (14) around an oscillation axis, resulting in a fan-shaped laser pulse emission pattern, wherein the laser scanner comprises an oscillation sensor configured for providing positions of the optical element.

9. The airborne laser scanner according to claim 7 or 8, wherein the computer is configured for determining the directions of the pulse paths based on the provided positions of the optical element.

10. The airborne laser scanner according to claim 1, wherein the computer is configured for determining
a current of the motor and
the directions of the pulse paths based on the current.

11. The airborne laser scanner according to claim 1, wherein the motor (24) is configured for rotating the optical element (23) around a second rotation axis, and the optical element is embodied as a polygon mirror, the deflection by the rotating polygon mirror resulting in a fan-shaped laser pulse emission pattern.

12. The airborne laser scanner according to claim 1, wherein the optical element is arranged relative to the emitter in such a way that the optical element deflects the laser pulses in a defined constant angle relative to the rotation axis or relative to the oscillation axis.

13. A computer-implemented method for reducing ranging bias and measurement point drop-outs caused by internal and near range reflections in an airborne laser scanner arranged on an aircraft for surveying a target along a flight path, comprising
triggering an emitter of the airborne laser scanner to emit laser pulses with a first pulse space variation,
deflecting the laser pulses with at least one optical element of the airborne laser scanner along pulse paths towards the target,
moving the optical element with a motor of the airborne laser scanner to cause a periodically repeating movement of the pulse paths, wherein the emitter is triggered to emit the laser pulses further with a second pulse space variation overlaying with the first pulse space variation,
receiving the laser pulses backscattered from the target with a receiver of the airborne laser scanner,
determining directions of the pulse paths
**characterized in that**
according to the second pulse space variation, pulse spaces between those pulses emitted during a first period of the periodically repeating movement are at least in part modified relative to pulse spaces between those pulses emitted during any of subsequent periods of the periodically repeating movement.

14. The computer-implemented method according to claim 13, wherein according to the second pulse space variation, pulse spaces between those pulses emitted during the first period are differing from the pulse spaces between those pulses emitted during any of the subsequent periods by one of:
a constant value,
a proportional value, and
a random value.

## Patentansprüche

1. Luftgestützter Laserscanner (4), der dafür konfiguriert ist, an einem Flugzeug angeordnet zu werden, um ein Ziel (2) entlang einer Flugbahn zu vermessen, wobei der luftgestützte Laserscanner Folgendes umfasst:
einen Sender (9, 16, 21), der dafür konfiguriert ist, eine Vielzahl aufeinanderfolgender Laserimpulse in Richtung der Bodenoberfläche auszusenden,
mindestens ein optisches Element (11, 14, 23), das dafür konfiguriert ist, die Laserimpulse entlang von Impulsbahnen in Richtung des Ziels abzulenken,
einen Motor (12, 15, 24), der dafür konfiguriert ist, das optische Element zu bewegen, um eine sich periodisch wiederholende Bewegung der Impulsbahnen zu bewirken,
einen Empfänger (10, 17, 22), der dafür konfiguriert ist, die vom Ziel zurückgestreuten Laserimpulse zu empfangen, und
einen Computer (8, 18, 20), der dafür konfiguriert ist,
den Sender, den Motor und den Empfänger zu steuern,
die Richtungen der Impulsbahnen zu bestimmen und
den Sender dazu zu veranlassen, die Laserimpulse mit einer ersten Impulsabstandsvariation auszusenden,
**dadurch gekennzeichnet, dass**
der Computer ferner dafür konfiguriert ist, den Sender dazu zu veranlassen, die Laserimpulse mit einer zweiten Impulsabstandsvariation auszusenden, die sich mit der ersten Impulsabstandsvariation überlagert, wobei gemäß der zweiten Impulsabstandsvariation Impulsabstände zwischen jenen Impulsen, die während einer ersten Periode der sich periodisch wiederholenden Bewegung ausgesendet werden, relativ zu Impulsabständen zwischen jenen Impulsen, die während einer der nachfolgenden Perioden der sich periodisch wiederholenden Bewegung ausgesendet werden, zumindest teilweise modifiziert sind.

2. Luftgestützter Laserscanner nach Anspruch 1, wobei die zweite Impulsabstandsvariation einem sinusförmigen Muster, einem linearen Zickzackmuster, einem Wellenmuster, einem Sägezahnmuster, einem Stufenmuster oder einer beliebigen Kombination dieser Muster folgt.

3. Luftgestützter Laserscanner nach Anspruch 1, wobei sich gemäß der zweiten Impulsabstandsvariation Impulsabstände zwischen jenen Impulsen, die während der ersten Periode ausgesendet werden, um
einen konstanten Wert von den Impulsabständen zwischen jenen Impulsen, die während einer der nachfolgenden Perioden ausgesendet werden, oder
einen proportionalen Wert von den Impulsabständen zwischen jenen Impulsen, die während einer der nachfolgenden Perioden ausgesendet werden, oder
einen zufälligen Wert von den Impulsabständen zwischen jenen Impulsen, die während einer der nachfolgenden Perioden ausgesendet werden,
unterscheiden.

4. Luftgestützter Laserscanner nach Anspruch 1, wobei gemäß der zweiten Impulsabstandsvariation während der nachfolgenden Perioden ausgesendeten Impulsabstände zwischen mindestens zwei verschiedenen Frequenzprofilen wechseln.

5. Luftgestützter Laserscanner nach Anspruch 1, wobei die sich periodisch wiederholende Bewegung eine Zickzackbewegung, eine Kreisbewegung oder eine Hubbewegung ist.

6. Luftgestützter Laserscanner nach Anspruch 1, wobei das optische Element ein Planspiegel (14), eine Keillinse, ein Prisma (11) oder ein Polygonspiegel (23) ist, insbesondere wobei das optische Element dafür konfiguriert ist, die vom Ziel zurückgestreuten Laserimpulse in Richtung des Empfängers abzulenken.

7. Luftgestützter Laserscanner nach Anspruch 1, wobei der Motor (12) dafür konfiguriert ist, das optische Element um eine erste Drehachse (A1) zu drehen, was zu einem kegelförmigen Laserimpuls-Emissionsmuster führt, wobei der luftgestützte Laserscanner ferner einen Winkelcodierer umfasst, der dafür konfiguriert ist, Positionen des optischen Elements bereitzustellen.

8. Luftgestützter Laserscanner nach Anspruch 1, wobei der Motor (15) dafür konfiguriert ist, das optische Element (14) um eine Schwingungsachse in Schwingung zu versetzen, was zu einem fächerförmigen Laserimpuls-Emissionsmuster führt, wobei der Laserscanner einen Schwingungssensor umfasst, der dafür konfiguriert ist, Positionen des optischen Elements bereitzustellen.

9. Luftgestützter Laserscanner nach Anspruch 7 oder 8, wobei der Computer dafür konfiguriert ist, die Richtungen der Impulsbahnen auf der Grundlage der bereitgestellten Positionen des optischen Elements zu bestimmen.

10. Luftgestützter Laserscanner nach Anspruch 1, wobei der Computer dafür konfiguriert ist,
einen Strom des Motors und
die Richtungen der Impulsbahnen auf der Grundlage des Stroms
zu bestimmen.

11. Luftgestützter Laserscanner nach Anspruch 1, wobei der Motor (24) dafür konfiguriert ist, das optische Element (23) um eine zweite Drehachse zu drehen, und das optische Element als Polygonspiegel ausgebildet ist, wobei die Ablenkung durch den sich drehenden Polygonspiegel zu einem fächerförmigen Laserimpuls-Emissionsmuster führt.

12. Luftgestützter Laserscanner nach Anspruch 1, wobei das optische Element relativ zum Sender derart angeordnet ist, dass das optische Element die Laserimpulse in einem definierten konstanten Winkel relativ zur Drehachse oder relativ zur Schwingungsachse ablenkt.

13. Computerimplementiertes Verfahren zur Verringerung von Entfernungsmessungsabweichungen und Messpunktausfällen, die durch interne und Nahfeld-Reflexionen in einem an einem Flugzeug angeordneten luftgestützten Laserscanner zur Vermessung eines Ziels entlang einer Flugbahn verursacht werden, umfassend
das Veranlassen eines Senders des luftgestützten Laserscanners, Laserimpulse mit einer ersten Impulsabstandsvariation auszusenden,
das Ablenken der Laserimpulse mit mindestens einem optischen Element des luftgestützten Laserscanners entlang von Impulsbahnen in Richtung des Ziels,
das Bewegen des optischen Elements mit einem Motor des luftgestützten Laserscanners, um eine sich periodisch wiederholende Bewegung der Impulsbahnen zu bewirken, wobei der Sender dazu veranlasst wird, die Laserimpulse ferner mit einer zweiten Impulsabstandsvariation auszusenden, die sich mit der ersten Impulsabstandsvariation überlagert,
das Empfangen der vom Ziel zurückgestreuten Laserimpulse mit einem Empfänger des luftgestützten Laserscanners,
das Bestimmen der Richtungen der Impulsbahnen,
**dadurch gekennzeichnet, dass**
gemäß der zweiten Impulsabstandsvariation die Impulsabstände zwischen jenen Impulsen, die während einer ersten Periode der sich periodisch wiederholenden Bewegung ausgesendet werden, relativ zu den Impulsabständen zwischen jenen Impulsen, die während einer der nachfolgenden Perioden der sich periodisch wiederholenden Bewegung ausgesendet werden, zumindest teilweise modifiziert sind.

14. Computerimplementiertes Verfahren nach Anspruch 13, wobei sich gemäß der zweiten Impulsabstandsvariation Impulsabstände zwischen jenen Impulsen, die während der ersten Periode ausgesendet werden, von den Impulsabständen zwischen jenen Impulsen, die während einer der nachfolgenden Perioden ausgesendet werden, um eines von Folgendem unterscheiden:
einen konstanten Wert,
einen proportionalen Wert und
einen Zufallswert.

## Revendications

1. Scanneur laser aéroporté (4) configuré pour être agencé sur un aéronef pour l'arpentage d'une cible (2) le long d'une trajectoire de vol, dans lequel le scanneur laser aéroporté comprend
un émetteur (9, 16, 21) configuré pour émettre une pluralité d'impulsions laser consécutives vers la surface du sol,
au moins un élément optique (11, 14, 23) configuré pour dévier les impulsions laser le long de trajectoires d'impulsions vers la cible,
un moteur (12, 15, 24) configuré pour mettre en mouvement l'élément optique afin de provoquer un mouvement se répétant périodiquement des trajectoires d'impulsions,
un récepteur (10, 17, 22) configuré pour recevoir les impulsions laser réfléchies par la cible, et
un ordinateur (8, 18, 20) configuré pour
commander l'émetteur, le moteur et le récepteur,
déterminer des directions des trajectoires d'impulsions, et
déclencher l'émetteur pour qu'il émette les impulsions laser avec une première variation d'espacement d'impulsions,
**caractérisé en ce que**
l'ordinateur est en outre configuré pour déclencher l'émetteur pour qu'il émette les impulsions laser avec une deuxième variation d'espacement d'impulsions se superposant à la première variation d'espacement d'impulsions, dans lequel, selon la deuxième variation d'espacement d'impulsions, des espacements d'impulsions entre les impulsions qui sont émises pendant une première période du mouvement se répétant périodiquement sont au moins en partie modifiés par rapport à des espacements d'impulsions entre les impulsions qui sont émises pendant l'une quelconque des périodes suivantes du mouvement se répétant périodiquement.

2. Scanneur laser aéroporté selon la revendication 1, dans lequel la deuxième variation d'espacement d'impulsions suit un motif sinusoïdal, un motif en zigzag linéaire, un motif ondulé, un motif en dents de scie, un motif en escalier, ou toute combinaison desdits motifs.

3. Scanneur laser aéroporté selon la revendication 1, dans lequel, selon la deuxième variation d'espacement d'impulsions, des espacements d'impulsions entre les impulsions qui sont émises pendant la première période diffèrent
d'une valeur constante par rapport aux espacements d'impulsions entre les impulsions qui sont émises pendant l'une quelconque des périodes suivantes, ou
d'une valeur proportionnelle par rapport aux espacements d'impulsions entre les impulsions qui sont émises pendant l'une quelconque des périodes suivantes ou
d'une valeur aléatoire par rapport aux espacements d'impulsions entre les impulsions qui sont émises pendant l'une quelconque des périodes suivantes.

4. Scanneur laser aéroporté selon la revendication 1, dans lequel, selon la deuxième variation d'espacement d'impulsions, des espacements d'impulsions émises pendant les périodes suivantes alternent entre au moins deux profils de fréquence différents.

5. Scanneur laser aéroporté selon la revendication 1, dans lequel le mouvement se répétant périodiquement est un mouvement en zigzag, un mouvement circulaire ou un mouvement de va-et-vient.

6. Scanneur laser aéroporté selon la revendication 1, dans lequel l'élément optique est un miroir plan (14), une lentille en coin, un prisme (11), ou un miroir polygonal (23),
en particulier dans lequel l'élément optique est configuré pour dévier les impulsions laser réfléchies par la cible vers le récepteur.

7. Scanneur laser aéroporté selon la revendication 1, dans lequel le moteur (12) est configuré pour mettre en rotation l'élément optique autour d'un premier axe de rotation (A1),
ce qui donne un motif d'émission d'impulsions laser en forme de cône, dans lequel le scanneur laser aéroporté comprend en outre un codeur angulaire configuré pour fournir des positions de l'élément optique.

8. Scanneur laser aéroporté selon la revendication 1, dans lequel le moteur (15) est configuré pour faire osciller l'élément optique (14) autour d'un axe d'oscillation, ce qui donne un motif d'émission d'impulsions laser en forme d'éventail, dans lequel le scanneur laser comprend un capteur d'oscillation configuré pour fournir des positions de l'élément optique.

9. Scanneur laser aéroporté selon la revendication 7 ou 8, dans lequel l'ordinateur est configuré pour déterminer les directions des trajectoires d'impulsions sur la base des positions fournies de l'élément optique.

10. Scanneur laser aéroporté selon la revendication 1, dans lequel l'ordinateur est configuré pour déterminer
un courant du moteur et
les directions des trajectoires d'impulsions sur la base du courant.

11. Scanneur laser aéroporté selon la revendication 1, dans lequel le moteur (24) est configuré pour mettre en rotation l'élément optique (23) autour d'un deuxième axe de rotation, et l'élément optique est réalisé sous la forme d'un miroir polygonal, la déviation par le miroir polygonal en rotation donnant lieu à un motif d'émission d'impulsions laser en forme d'éventail.

12. Scanneur laser aéroporté selon la revendication 1, dans lequel l'élément optique est agencé par rapport à l'émetteur de telle sorte que l'élément optique dévie les impulsions laser selon un angle constant défini par rapport à l'axe de rotation ou par rapport à l'axe d'oscillation.

13. Procédé mis en œuvre par ordinateur pour réduire des biais de télémétrie et des pertes de points de mesure causées par des réflexions internes et à courte portée dans un scanneur laser aéroporté agencé sur un aéronef pour l'arpentage d'une cible le long d'une trajectoire de vol, comprenant
le déclenchement d'un émetteur du scanneur laser aéroporté pour émettre des impulsions laser avec une première variation d'espacement d'impulsions,
la déviation des impulsions laser à l'aide d'au moins un élément optique du scanneur laser aéroporté le long de trajectoires d'impulsions vers la cible,
la mise en mouvement de l'élément optique à l'aide d'un moteur du scanneur laser aéroporté pour provoquer un mouvement se répétant périodiquement des trajectoires d'impulsions, dans lequel l'émetteur est déclenché pour émettre les impulsions laser plus loin avec une deuxième variation d'espacement d'impulsions se superposant à la première variation d'espacement d'impulsions,
la réception des impulsions laser impulsions laser réfléchies par la cible à l'aide d'un récepteur du scanneur laser aéroporté,
la détermination de directions des trajectoires d'impulsions
**caractérisé en ce que**
selon la deuxième variation d'espacement d'impulsions, des espacements d'impulsions entre les impulsions qui sont émises pendant une première période du mouvement se répétant périodiquement sont au moins en partie modifiés par rapport aux espacements d'impulsions entre les impulsions qui sont émises pendant l'une quelconque des périodes suivantes du mouvement se répétant périodiquement.

14. Procédé mis en œuvre par ordinateur selon la revendication 13, dans lequel, selon la deuxième variation d'espacement d'impulsions, des espacements d'impulsions entre les impulsions qui sont émises pendant la première période diffèrent des espacements d'impulsions entre les impulsions qui sont émises pendant l'une quelconque des périodes suivantes d'une des valeurs suivantes :
une valeur constante,
une valeur proportionnelle, et
une valeur aléatoire.
